# EUROPÄISCHE PATENTANMELDUNG

(11) **EP 4 506 818 A1**
(43) Veröffentlichungstag der Anmeldung: **12.02.2025**
(21) Anmeldenummer: 23190562.1
(22) Anmeldetag: 09.08.2023
(51) Int. Cl.: G06F 9/50

(54) **VERFAHREN ZUM BEARBEITEN EINER DATENVERARBEITUNGSANFORDERUNG VON EINEM NUTZER MITTELS EINES DATENVERARBEITUNGSSYSTEMS, COMPUTERPROGRAMMPRODUKT, COMPUTERLESBARES SPEICHERMEDIUM SOWIE DATENVERARBEITUNGSSYSTEM**

(71) Anmelder: Siemens Aktiengesellschaft, 80333 München (DE)
(72) Erfinder: Oeh, Dominik, 96146 Altendorf (DE); Weiss, Johannes, 96170 Lisberg (DE); Winhuysen, Jan, 80469 München (DE)
(74) Vertreter: Siemens Patent Attorneys

(57) **Zusammenfassung**

Die Erfindung betrifft ein Verfahren zum Bearbeiten einer Datenverarbeitungsanforderung (44), mit den Schritten:
- Empfangen der Datenverarbeitungsanforderung (44) mittels einer ersten elektronischen Recheneinrichtung (30);
- Bewerten eines Energieaufwands der Datenverarbeitungsanforderung (44);
- Empfangen eines aktuellen ersten Energiewerts (48) für nachhaltig erzeugte Energie in einem lokalen ersten Bereich (12) ;
- Empfangen eines aktuellen zweiten Energiewerts (50) für nachhaltig erzeugte Energie in einem lokalen zweiten Bereich (14) einer zweiten elektronischen Recheneinrichtung (32), wobei der zweite Bereich (14) unabhängig und disloziert vom ersten Bereich (12) ist; und
- Bearbeiten der Datenverarbeitungsanforderung (44) in Abhängigkeit von dem Energieaufwand, dem aktuellen ersten Energiewert (48) und dem aktuellen zweiten Energiewert (50) mittels der ersten elektronischen Recheneinrichtung (30) oder der zweiten elektronischen Recheneinrichtung (32).

Ferner betrifft die Erfindung ein Computerprogrammprodukt, ein computerlesbares Speichermedium sowie ein Datenverarbeitungssystem (10).

## Beschreibung

Die Erfindung betrifft ein Verfahren zum Bearbeiten einer Datenverarbeitungsanforderung von einem Nutzer mittels eines Datenverarbeitungssystems gemäß dem geltenden Patentanspruch 1. Ferner betrifft die Erfindung ein Computerprogrammprodukt, ein computerlesbares Speichermedium sowie ein Datenverarbeitungssystem.

Elektrischer Strom muss immer dann ins Netz eingespeist werden, wenn die Verbraucher ihn benötigen. Erneuerbare Energie, insbesondere Wind- oder Sonnenenergie, wird immer dann erzeugt, wenn der Wind weht oder die Sonne scheint. In diesem Fall wird die fossile Stromerzeugung, das heißt insbesondere kohle- oder gasbefeuerte Kraftwerke, zugunsten von "grüner Energie", welche auch als nachhaltige Energie bezeichnet werden kann, abgeschaltet.

Je mehr Wind- und Solarkraftwerke gebaut werden, desto wahrscheinlicher ist es, dass die Nachfrage im Wesentlichen zu 100 Prozent aus erneuerbaren Energien gedeckt werden kann. Es kann jedoch Zeiten geben, in denen einer Region nicht so viele erneuerbare Energie zur Verfügung stehen. Aber der Wind weht und die Sonne scheint dann immer in einer anderen Region der Welt. Die Übertragung von Energie aus Regionen mit derzeit hoher Verfügbarkeit erneuerbarer Energien in Regionen mit derzeit geringer Verfügbarkeit erneuerbare Energie ist kostspielig, hierbei muss insbesondere Infrastruktur gebaut werden, und dies geht mit Energieverlusten beim Transport einher.

Moderne Computersysteme sind ferner für den Betrieb in Rechenzentren ausgelegt und können so skaliert werden, dass sie eine große Anzahl von Nutzern bedienen können, die die Systeme verwenden. Diese Rechenzentren werden an einem konkreten Standort eingerichtet. Ein Standort befindet sich dann innerhalb einer Region. Zum Beispiel könnte es ein Rechenzentrum am Standort "Frankfurt" innerhalb der Region "Deutschland" geben. Wenn Benutzer Computersysteme nutzen, die in solchen Rechenzentren gehostet werden, werden sie größer und benötigen mehr Rechenleistung, was zu einem höheren Energieverbrauch führt. Folglich steigt der Energiebedarf für die Region, in der sich das Rechenzentrum befindet. Gleichzeitig kann es vorkommen, dass die Region nicht in der Lage ist, genügend erneuerbare Energien bereitzustellen.

Um die Umwelt zu schützen und ein hohes Maß an Nachhaltigkeit zu erreichen, ist es wünschenswert, jederzeit eine im Wesentlichen 100 prozentige Versorgung mit erneuerbarer Energie zu erreichen. Wie bereits beschrieben, erfordert dies aufgrund der Natur der erneuerbaren Energien einige neue Innovationen zur Überwindung der Grenzen.

Angenommen, ein Computersystem wird in einem Rechenzentrum gehostet, das von vielen Nutzern verwendet wird und daher viel Rechenleistung benötigt, wobei einer Region, in der sich das Rechenzentrum befindet, nicht genügend erneuerbare Energie zur Verfügung steht, während an anderen Regionen der Welt genügend erneuerbare Energien verfügbar ist, entsteht das technische Problem, wie entsprechende Rechenleistung von anderen Regionen genutzt werden kann, und gleichzeitig eine höhere Verfügbarkeit von erneuerbarer Energie genutzt werden kann, um die entsprechende Energie dort zu verbrauchen.

Gemäß dem Stand der Technik wird derzeit die Rechenlast nicht zwischen Rechenzentren verlagert, um erneuerbare Energien in anderen Regionen der Welt zu verbrauchen. Vielmehr geht man davon aus, dass Energie nur dort vorhanden ist, wo der Bedarf entsteht. Wenn also in einer Region zu wenig Energie im Netz verfügbar ist, muss die Energie aus anderen Regionen importiert werden. Dies kann natürlich über Festlandleitungen oder über fossile Brennstoffe geschehen, die in Kraftwerken zur Energieerzeugung verbrannt werden.

Eine weitere technische Lösung zur Energieverlagerung ist die Verwendung von Speichertechnologien, zum Beispiel Batterien. In diesem Fall wird in "guten Zeiten", insbesondere wenn genügend Energie zur Verfügung steht, der entsprechende Speicher gefüllt und in "schlechten Zeiten", insbesondere wenn zu wenig Energie zur Verfügung steht, der Speicher geleert, um die gespeicherte Energie bereitzustellen. Dieser Prozess erfordert in der Regel selbst etwas Energie und ist nicht zu 100 Prozent effizient. Bei diesem Ansatz wird die Energie auf einer Zeitachse verschoben.

Aufgabe der vorliegenden Erfindung ist es, ein Verfahren, ein Computerprogrammprodukt, ein computerlesbares Speichermedium sowie ein Datenverarbeitungssystem zu schaffen, mittels welchen verbessert eine Datenverarbeitungsanfrage bearbeitet werden kann.

Diese Aufgabe wird durch ein Verfahren, ein Computerprogrammprodukt, ein computerlesbares Speichermedium sowie ein Datenverarbeitungssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bearbeiten einer Datenverarbeitungsanforderung von einem Nutzer mittels eines Datenverarbeitungssystems. Es wird die Datenverarbeitungsanforderung mittels einer ersten elektronischen Recheneinrichtung des Datenverarbeitungssystems empfangen. Es wird der Energieaufwand der Datenverarbeitungsanforderung mittels der ersten elektronischen Recheneinrichtung bewertet. Es wird ein aktueller erster Energiewert für nachhaltig erzeugte Energie in einem lokalen ersten Bereich der ersten elektronischen Recheneinrichtung mittels einer Empfangseinrichtung der ersten elektronischen Recheneinrichtung empfangen. Es erfolgt das Empfangen eines aktuellen zweiten Energiewerts für nachhaltig erzeugte Energie in einem lokalen zweiten Bereich einer zweiten elektronischen Recheneinrichtung des Datenverarbeitungssystems, wobei der zweite Bereich unabhängig und disloziert vom ersten Bereich ist, mittels der Empfangseinrichtung. Die Datenverarbeitungsanforderung wird in Abhängigkeit von dem Energieaufwand, dem aktuellen ersten Energiewert und dem aktuellen zweiten Energiewert mittels der ersten elektronischen Recheneinrichtung oder der zweiten elektronischen Recheneinrichtung bearbeitet.

Insbesondere kann somit verbessert die Bearbeitung der Datenverarbeitungsanforderung durchgeführt werden. Insbesondere zieht somit die Erfindung in Betracht, innerhalb welchem lokalen Bereich ein hoher Wert an nachhaltig erzeugter Energie vorhanden ist. Sollte beispielsweise im Bereich der ersten elektronischen Recheneinrichtung, beispielsweise in einem entsprechenden Land, ein hoher Wert für nachhaltige Energieerzeugung bereitgestellt werden, so kann die Datenverarbeitungsanforderung lokal von der angefragten ersten elektronischen Recheneinrichtung bearbeitet werden. Sollte es jedoch beispielsweise einen niedrigen aktuellen ersten Energiewert aufweisen, so kann überprüft werden, ob in einem unterschiedlichen lokalen Bereich, beispielsweise in einem unterschiedlichen Land, beispielsweise auf der Weltkugel gegenüberliegend, ob dort genügend nachhaltig erzeugte Energie vorhanden ist. Sollte dann im ersten Bereich wenig nachhaltig erzeugte Energie bereitstehen, jedoch im zweiten Bereich ein hoher Wert an nachhaltig erzeugter elektrischer Energie bereitstehen, so kann die Datenverarbeitungsanforderung insbesondere an die zweite elektronische Recheneinrichtung übertragen werden und dort von der zweiten elektronischen Recheneinrichtung bearbeitet werden. Somit ist es ermöglicht, dass ein hoher Wert an Energieverbrauch über nachhaltig erzeugter Energie bereitgestellt werden kann. Dies fördert die Nachhaltigkeit und dient insbesondere dem Umweltschutz.

Insbesondere ist somit gegenüber dem Stand der Technik zu vorgesehen, dass anstatt die Last nur aus Leistungs- oder Kostengründen zu verteilen, werden Nachhaltigkeitsaspekte berücksichtigt und die Last kann entsprechend der verfügbaren erneuerbaren Energie verteilt werden. Anstatt Energie zu speichern und zu einem späteren Zeitpunkt, insbesondere bei Bedarf, zu verbrauchen, wird direkt die erzeugte nachhaltige Energie verbraucht, die an anderen Orten der Welt verfügbar ist. Dadurch werden Verluste bei der Speicherung und der Energie und zusätzliche Lagerkosten vermieden. Ferner wird, anstatt die Energie aus anderen Regionen zu dem Ort zu transportieren, an dem sie verbraucht wird, die entsprechende Datenverarbeitungsanforderung übertragen. Dadurch werden Verluste beim Energietransport vermieden und der Bedarf an Investitionen in die Infrastruktur für den Energietransport verringert.

Die erste elektronische Recheneinrichtung kann dabei in einem ersten Rechenzentrum, beispielsweis ein Deutschland lokalisiert sein. Die zweite elektronische Recheneinrichtung kann beispielsweise in einem zweiten Rechenzentrum, beispielsweise in Amerika lokalisiert sein.

Gemäß einer vorteilhaften Ausgestaltungsform wird bei einer Bearbeitung der Datenverarbeitungsanforderung mittels der zweiten elektronischen Recheneinrichtung die Datenverarbeitungsanforderung von der ersten elektronischen Recheneinrichtung an die zweite elektronische Recheneinrichtung über eine Datenleitung übermittelt. Bei der Datenleitung handelt es sich insbesondere um einen sogenannten Data Backbone. Über den Data Backbone können die elektronischen Recheneinrichtungen sich gegenseitig synchronisieren. Mit anderen Worten, sollte entschieden werden, dass die Datenverarbeitungsanforderung von der zweiten elektronischen Recheneinrichtung abgearbeitet werden soll, so wird zunächst die Datenverarbeitungsanforderung an die zweite elektronische Recheneinrichtung von der ersten elektronischen Recheneinrichtung übermittelt. Es erfolgt dann die Bearbeitung der Datenverarbeitungsanforderung mittels der zweiten elektronischen Recheneinrichtung. Im Anschluss daran wird die bearbeitete Datenverarbeitungsanforderung wiederum an die erste elektronische Recheneinrichtung über die Datenleitung übertragen. Die bearbeitete Datenverarbeitungsanforderung kann wiederum über die erste elektronische Recheneinrichtung dem Nutzer zur Verfügung gestellt werden. Somit ist es ermöglicht, dass auf einfache Art und Weise und nachhaltig die Bearbeitung der Datenverarbeitungsanforderung durchgeführt werden kann.

Es hat sich weiterhin als vorteilhaft erwiesen, wenn nach der Bearbeitung der Datenverarbeitungsanforderung mittels der zweiten elektronischen Recheneinrichtung die bearbeitete Datenverarbeitungsanforderung über die Datenleitung von der zweiten elektronischen Recheneinrichtung an die erste elektronische Recheneinrichtung übermittelt wird. Mit anderen Worten, sollte entschieden werden, dass die Datenverarbeitungsanforderung von der zweiten elektronischen Recheneinrichtung abgearbeitet werden soll, so wird zunächst die Datenverarbeitungsanforderung an die zweite elektronische Recheneinrichtung von der ersten elektronischen Recheneinrichtung übermittelt. Es erfolgt dann die Bearbeitung der Datenverarbeitungsanforderung mittels der zweiten elektronischen Recheneinrichtung. Im Anschluss daran wird die bearbeitete Datenverarbeitungsanforderung wiederum an die erste elektronische Recheneinrichtung über die Datenleitung übertragen. Die bearbeitete Datenverarbeitungsanforderung kann wiederum über die erste elektronische Recheneinrichtung dem Nutzer zur Verfügung gestellt werden. Somit ist es ermöglicht, dass auf einfache Art und Weise und nachhaltig die Bearbeitung der Datenverarbeitungsanforderung durchgeführt werden kann.

Weiterhin vorteilhaft ist, wenn bei einem Überschreiten eines vorgegebenen aktuellen ersten Energiewerts die Datenverarbeitungsanforderung mittels der ersten elektronischen Recheneinrichtung bearbeitet wird. Beispielsweise kann vorgesehen sein, dass nach dem Bewerten des Energiebedarfs bestimmt wird, dass mindestens mit 90 Prozent nachhaltiger Energie die Datenverarbeitungsanforderung zu bearbeiten ist. Sollte festgestellt werden, dass genügend nachhaltige Energie, insbesondere somit über 90 Prozent an nachhaltiger Energie, bereitgestellt werden kann, so wird lokal innerhalb der ersten elektronischen Recheneinrichtung die Datenverarbeitungsanforderung bearbeitet. Somit können beispielsweise Zeitverzögerungen bei der Datenverarbeitungsbeantwortung, welche beispielsweise aufgrund von Latenzzeiten innerhalb der Datenleitungen zu verzeichnen sind, vermieden werden.

Eine weitere vorteilhafte Ausgestaltungsform sieht vor, dass bei einem Unterschreiten eines vorgegebenen aktuellen ersten Energiewerts und bei einem Überschreiten eines vorgegebenen aktuellen zweiten Energiewerts die Datenverarbeitungsanforderung mittels der zweiten elektronischen Recheneinrichtung bearbeitet wird. So wird beispielsweise der aktuelle erste Energiewert unterhalb von 90 Prozent sein als Schwellwert, so kann bestimmt werden, dass beispielsweise mittels der zweiten elektronischen Recheneinrichtung die Bearbeitung der Datenverarbeitungsanforderung durchzuführen ist. Sollte dann wiederum im lokalen zweiten Bereich ein aktueller zweiter Energiewert von oberhalb von 90 Prozent bereitgestellt werden, so wird entschieden, dass die Datenverarbeitungsanforderung mittels der zweiten elektronischen Recheneinrichtung durchzuführen ist. Bei dem Prozentwert handelt es sich insbesondere um den Wert von nachhaltig erzeugter Energie zu dem bestimmten Energiebedarf. Des Weiteren ist der Schwellwert rein beispielhaft und keinesfalls als abschließend zu betrachten.

Somit kann nachhaltig die Bearbeitung der Datenverarbeitungsanforderung durchgeführt werden.

Es hat sich weiter als vorteilhaft erwiesen, wenn bei einem Unterschreiten eines vorgegebenen aktuellen ersten Energiewerts und bei einem Unterschreiten eines vorgegebenen aktuellen zweiten Energiewerts die Datenverarbeitungsanforderung mittels der ersten elektronischen Recheneinrichtung bearbeitet wird. Insbesondere, sollte somit festgestellt werden, dass sowohl im ersten lokalen Bereich als auch im zweiten lokalen Bereich zu wenig nachhaltige Energie bereitgestellt werden kann, so verbleibt die Bearbeitung innerhalb der ersten elektronischen Recheneinrichtung. Somit können Energieverluste sowie Zeitverluste bei der Bearbeitung beziehungsweise Übertragung verhindert werden.

Ferner hat es sich als vorteilhaft erwiesen, wenn der aktuelle erste Energiewert und/oder der zweite aktuelle Energiewert von einem jeweiligen lokalen Energieversorger empfangen werden. Insbesondere kann in einer jeweiligen elektronischen Recheneinrichtung eine Datenbank zur Verfügung stehen, die Informationen über den Grad an erneuerbarer Energie enthält, der in der Region derzeit verfügbar ist. Wenn zum Beispiel 100 Prozent erneuerbare Energie verfügbar ist, kann die Information mit 1 hinterlegt werden. Wenn null Prozent erneuerbare Energie verfügbar ist, so kann die Information mit 0 hinterlegt werden. Diese Indexinformationen über erneuerbare Energien werden von den lokalen Energieversorgern der Region bereitgestellt. Diese müssen den Grad der verfügbaren erneuerbaren Energie an die jeweilige elektronische Recheneinrichtung weitergeben. Die Informationen über den Index der erneuerbaren Energien der jeweiligen elektronischen Recheneinrichtung werden an alle anderen elektronischen Recheneinrichtungen übermittelt. Somit kann zuverlässig und nachhaltig die Datenverarbeitungsanforderung bearbeitet werden. Es kann auch sein, dass der Energiewert vom lokalen Energieversorger nur bereitgestellt wird, aber abgefragt werden kann. Darüber hinaus ist es möglich, dass der Betreiber eines lokalen Rechenzentrums eine eigene Energieerzeugung in Form von Solar- oder Windparks betreibt - in dem Falle kann auch der Betreiber den Energiewert entsprechend setzen.

In einer weiteren vorteilhaften Ausgestaltungsform ist vorgesehen, dass die jeweiligen aktuellen Energiewerte zwischen den elektronischen Recheneinrichtungen ausgetauscht werden.

Insbesondere werden somit die Informationen über den entsprechenden Index der erneuerbaren Energien der jeweiligen elektronischen Recheneinrichtung an alle anderen elektronische Recheneinrichtungen weitergegeben, sodass diese in Kenntnis gesetzt sind, welcher Index der erneuerbaren Energien in der anderen Region verfügbar ist. Somit kann höchst zuverlässig bestimmt werden, ob eine bearbeitete Datenverarbeitungsanforderung lokal abgearbeitet wird oder ausgelagert wird.

Ferner hat es sich als vorteilhaft erwiesen, wenn nur zeitunkritische Datenverarbeitungsanforderungen mittels der zweiten elektronischen Recheneinrichtung bearbeitet werden. Insbesondere kann die Datenverarbeitungsanforderung beispielsweise von dem Nutzer als zeitunkritisch eingestuft werden. Insbesondere aufgrund von Latenzzeiten bei der Übertragung der Datenverarbeitungsanforderung ist somit vorgesehen, dass lediglich zeitunkritische Datenverarbeitungsanforderungen von der zweiten elektronischen Recheneinrichtung bearbeitet werden. Dies verhindert, dass zeitkritische Datenverarbeitungsanforderungen erst von der ersten elektronischen Recheneinrichtung an die zweite elektronische Recheneinrichtung übertragen werden müssen und umgekehrt. Somit kann verhindert werden, dass zeitkritische Datenverarbeitungsanforderungen verzögert werden.

Gemäß einer weiteren vorteilhaften Ausgestaltungsform wird die Datenverarbeitungsanfrage mittels der ersten elektronischen Recheneinrichtung in zumindest zwei Teildatenverarbeitungsanfragen unterteilt und in Abhängigkeit von den jeweiligen aktuellen Energiewerten ein erster Teil der Datenverarbeitungsanfrage mittels der ersten elektronischen Recheneinrichtung bearbeitet und/oder ein zweiter Teil der Datenverarbeitungsanfrage wird mittels der zweiten elektronischen Recheneinrichtung bearbeitet. Insbesondere in Abhängigkeit von den aktuellen Energiewerten, welche der ersten elektronischen Recheneinrichtung von beiden elektronischen Recheneinrichtungen vorliegen, kann auch eine Teilung der Datenverarbeitungsanforderungen durchgeführt werden. Somit kann in Abhängigkeit der aktuellen lokalen Energiewerte entschieden werden, welche Teile beispielsweise an die zweite elektronische Recheneinrichtung übertragen werden und dort bearbeitet werden. Somit ist es ermöglicht, dass mit einer höheren Nachhaltigkeit eine Datenverarbeitungsanforderung bearbeitet werden kann.

Es hat sich weiterhin als vorteilhaft erwiesen, wenn die erste elektronische Recheneinrichtung und/oder die zweite elektronische Recheneinrichtung zum Durchführen von Container-Anwendungen bereitgestellt werden. Beispielsweise können die erste elektronische Recheneinrichtung und die zweite elektronische Recheneinrichtung auf Basis von Kubernetes oder sogenannter serverloser Infrastruktur basieren. Insbesondere ermöglicht dies, dass die elektronischen Recheneinrichtungen dazu ausgebildet sind, eine skalierte Flexibilität aufzuweisen, wodurch sehr zuverlässig die Datenverarbeitungsanforderung bearbeitet werden kann.

Ebenfalls vorteilhaft ist, wenn ein potentieller Energieaufwand zum Übertragen der Datenverarbeitungsanfrage zwischen den elektronischen Recheneinrichtungen berücksichtigt wird. Insbesondere auch die Datenübertragung, insbesondere die Übertragung der Datenverarbeitungsanforderung, ist mit einem Energiebedarf behaftet. Dieser kann nun berücksichtigt werden, sodass entschieden werden kann, ob es sich lohnt, dass die Datenverarbeitungsanforderung beispielsweise an die zweite elektronische Recheneinrichtung übertragen wird und wieder zurück übertragen wird. Somit können auch entsprechende Energiebedarfe der Datenübertragung mit bei dem erfindungsgemäßen Verfahren berücksichtigt werden, sodass die Nachhaltigkeit noch weiter gesteigert wird.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ferner betrifft die Erfindung daher auch ein computerlesbares Speichermedium mit dem Computerprogrammprodukt.

Ein nochmals weiterer Aspekt der Erfindung betrifft ein Datenverarbeitungssystem zum Bearbeiten einer Datenverarbeitungsanforderung von einem Nutzer, mit zumindest einer ersten elektronischen Recheneinrichtung und einer zweiten elektronischen Recheneinrichtung, wobei das Datenverarbeitungssystem zum Durchführen eines Verfahrens nach dem vorhergehenden Aspekt ausgebildet ist. Insbesondere wird das Verfahren mittels des Datenverarbeitungssystems durchgeführt.

Vorteilhafte Ausgestaltungsformen des Verfahrens sind als vorteilhafte Ausgestaltungsformen des Computerprogrammprodukts, des computerlesbaren Speichermediums sowie des Datenverarbeitungssystems anzusehen. Das Datenverarbeitungssystem weist insbesondere gegenständliche Merkmale auf, um entsprechende Verfahrensschritte durchführen zu können.

Es sei an dieser Stelle angemerkt, dass das Verfahren insbesondere mittels der ersten elektronischen Recheneinrichtung im Wesentlichen durchgeführt wird. Es ist jedoch auch möglich, dass zusätzlich das Datenverarbeitungssystem eine zentrale elektronische Recheneinrichtung aufweist, welche zum Verteilen der Datenverarbeitungsanforderung ausgebildet ist.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SR_AM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigt:

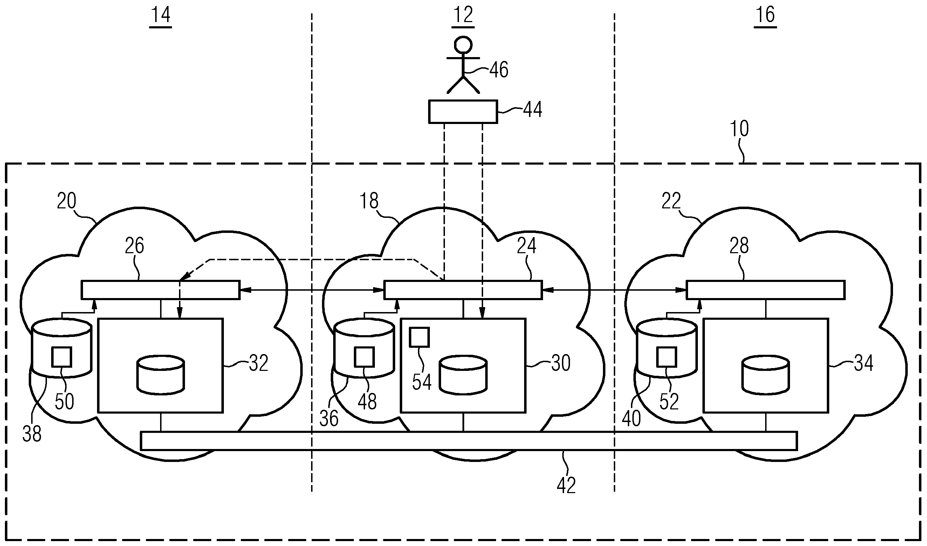

- FIG 1: ein schematisches Blockschaltbild gemäß einer Ausführungsform eines Datenverarbeitungssystems.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

FIG 1 zeigt ein schematisches Blockschaltbild gemäß einer Ausführungsform eines Datenverarbeitungssystems 10. Das Datenverarbeitungssystem 10 erstreckt sich im vorliegenden Ausführungsbeispiel über drei lokale Bereiche 12, 14, 16. Insbesondere sind ein erster lokaler Bereich 12, ein zweiter lokaler Bereich 14 sowie ein dritter lokaler Bereich 16 gezeigt. Beispielsweise handelt es sich bei dem ersten lokalen Bereich 12 um die Region Europa, bei dem zweiten lokalen Bereich 14 um die Region Nordamerika und bei dem dritten lokalen Bereich 16 um die Region Südasien.

Ein jeder lokaler Bereich 12 weist im vorliegenden Ausführungsbeispiel ein jeweiliges Rechenzentrum 18, 20, 22 auf. Der erste lokale Bereich 12 weist ein erstes Rechenzentrum 18, der zweite lokale Bereich 14 weist ein zweites Rechenzentrum 20 und der dritte lokale Bereich 16 weist ein drittes Rechenzentrum 22 auf. Unter Rechenzentrum ist im vorliegenden Ausführungsbeispiel insbesondere zu verstehen, dass entsprechende Verteilungseinrichtungen 24, 26, 28, entsprechende elektronische Recheneinrichtungen 30, 32, 34 und entsprechende Datenbanken 36, 38, 40 vorliegen.

Mit anderen Worten weist im vorliegenden Ausführungsbeispiel das erste Rechenzentrum 18 eine erste Verteilungseinrichtung 24, beispielsweise in Form einer Steuerungseinrichtung, auf. Ferner weist das erste Rechenzentrum 18 eine erste elektronische Recheneinrichtung 30 sowie eine erste Datenbank 36 auf. Das zweite Rechenzentrum 20 weist eine zweite Verteilungseinrichtung 26, eine zweite elektronische Recheneinrichtung 32 sowie eine zweite Datenbank 38 auf. Das dritte Rechenzentrum 22 weist eine dritte Verteilungseinrichtung 28, eine dritte elektronische Recheneinrichtung 34 sowie eine dritte Datenbank 40 auf. Die elektronischen Recheneinrichtungen 30, 32, 34 sind über eine Datenleitung 42 miteinander gekoppelt.

Alternativ können die Verteilungseinrichtungen 24, 26, 28 auch über eine zur Datenleitung 42 separaten Kommunikationsleitung miteinander kommunizieren.

Im Nachfolgenden wird insbesondere das Verfahren anhand einer Kommunikation zwischen der ersten elektronischen Recheneinrichtung 30 beziehungsweise des ersten Rechenzentrums 18 mit der zweiten elektronischen Recheneinrichtung 32 beziehungsweise dem zweiten Rechenzentrum 20 beschrieben. Es ist selbstverständlich, dass eine Kommunikation auch mit dem dritten Rechenzentrum 22 durchgeführt werden kann beziehungsweise auch zwischen dem zweiten Rechenzentrum 20 und dem dritten Rechenzentrum 22.

Gemäß einer Ausgestaltungsform des Verfahrens ist vorgesehen, dass eine Datenverarbeitungsanforderung 44 von einem Nutzer 46 bearbeitet werden soll. Es erfolgt das Empfangen der Datenverarbeitungsanforderung 44 mittels der ersten elektronischen Recheneinrichtung 30, vorliegend insbesondere mittels der ersten Verteilungseinrichtung 24. Mit anderen Worten kann vorgesehen sein, dass die Verteilungseinrichtungen 24, 26, 28 separat zu den elektronischen Recheneinrichtungen 30, 32, 34 ausgebildet sein können, oder auch als Teil der jeweiligen elektronischen Recheneinrichtungen 30, 32, 34 ausgebildet sein können. Es erfolgt das Bewerten eines Energieaufwands der Datenverarbeitungsanforderung 44 mittels der ersten elektronischen Recheneinrichtung 30 oder der ersten Verteilungseinrichtung 24. Es wird ein aktueller erster Energiewerts für nachhaltig erzeugte Energie im lokalen ersten Bereich 12 der ersten elektronischen Recheneinrichtung 30 mittels einer Empfangseinrichtung 54 der ersten elektronischen Recheneinrichtung 30 empfangen. Es erfolgt das Empfangen eines aktuellen zweiten Energiewerts 50 für nachhaltig erzeugte Energie in dem lokalen zweiten Bereich 14 der zweiten elektronischen Recheneinrichtung 32, wobei der zweite Bereich 14 unabhängig und disloziert vom ersten Bereich 12 ist, mittels der Empfangseinrichtung 54. Es wird dann die Datenverarbeitungsanforderung 44 in Abhängigkeit von dem Energieaufwand, dem aktuellen ersten Energiewert 48 und dem aktuellen zweiten Energiewert 50 mittels der ersten elektronischen Recheneinrichtung 30 oder der zweiten elektronischen Recheneinrichtung 32 bearbeitet.

Insbesondere ist dabei vorgesehen, dass bei einer Bearbeitung der Datenverarbeitungsanforderung 44 mittels der zweiten elektronischen Recheneinrichtung 32 die Datenverarbeitungsanforderung 44 von der ersten elektronischen Recheneinrichtung 30 an die zweite elektronische Recheneinrichtung 32 übermittelt wird. Nach der Bearbeitung der Datenverarbeitungsanforderung 44 mittels der zweiten elektronischen Recheneinrichtung 32 wird wiederum die bearbeitete Datenverarbeitungsanforderung über die Datenleitung 42 von der zweiten elektronischen Recheneinrichtung 32 an die erste elektronische Recheneinrichtung 30 übermittelt.

Insbesondere kann dabei vorgesehen sein, dass bei einem Überschreiten eines vorgegebenen aktuellen ersten Energiewerts 48 die Datenverarbeitungsanforderung 44 mittels der ersten elektronischen Recheneinrichtung 30 bearbeitet wird. Alternativ kann bei einem Unterschreiten eines vorgegebenen aktuellen ersten Energiewerts 48 und bei einem Überschreiten eines vorgegebenen aktuellen zweiten Energiewerts 50 die Datenverarbeitungsanforderung 44 mittels der zweiten elektronischen Recheneinrichtung 32 bearbeitet werden. Nochmals alternativ kann bei einem Unterschreiten eines vorgegebenen aktuellen ersten Energiewerts 48 und bei einem Unterschreiten eines vorgegebenen aktuellen zweiten Energiewerts 50 die Datenverarbeitungsanforderung 44 mittels der ersten elektronischen Recheneinrichtung 30 bearbeitet werden.

Der aktuelle erste Energiewert 48 und/oder der aktuelle zweite Energiewert 50 können dabei von dem jeweiligen lokalen Energieversorger empfangen werden.

Ferner kann vorgesehen sein, dass die jeweiligen aktuellen Energiewerte 48, 50, 52 zwischen den elektronischen Recheneinrichtungen 30, 32, 34 ausgetauscht werden.

Ebenfalls kann vorgesehen sein, dass nur zeitunkritische Datenverarbeitungsanforderungen 44 mittels der zweiten elektronischen Recheneinrichtung 32 bearbeitet werden.

Des Weiteren kann vorgesehen sein, dass die Datenverarbeitungsanforderung mittels der ersten elektronischen Recheneinrichtung 30 in zumindest zwei Teildatenverarbeitungsanforderungen unterteilt wird und in Abhängigkeit von den jeweiligen aktuellen Energiewerten 48, 50, 52 ein erster Teil der Datenverarbeitungsanforderung mittels der ersten elektronischen Recheneinrichtung 30 bearbeitet wird und/oder ein zweiter Teil der Datenverarbeitungsanforderung 44 mittels der zweiten elektronischen Recheneinrichtung 32 bearbeitet wird.

Ebenfalls kann vorgesehen sein, dass die erste elektronische Recheneinrichtung 30 und/oder die zweite elektronische Recheneinrichtung 32 zum Durchführen von Container-Anwendungen bereitgestellt werden.

Nochmals kann weiter vorgesehen sein, dass ein potentieller Energieaufwand zum Übertragen der Datenverarbeitungsanforderung 44 zwischen den elektronischen Recheneinrichtungen 30, 32, 34 berücksichtigt wird.

Insbesondere zeigt somit die FIG 1, dass in jedem Rechenzentrum 18, 20, 22 eine Datenbank 36, 38, 40 bereitgestellt wird, die Informationen über den Anteil an erneuerbarer Energie enthält, der in den lokalen Bereichen 12, 14, 16 derzeit verfügbar ist. Wenn beispielsweise 100 Prozent erneuerbarer Energie verfügbar ist, ist die Information 1. Wenn null Prozent erneuerbarer Energie verfügbar ist, ist die Information 0. Diese Index-Information über erneuerbare Energien wird von den lokalen Energieversorgern der lokalen Bereiche 12, 14, 16 bereitgestellt. Diese müssen den Grad der verfügbaren Energien an die Rechenzentren 18, 20, 22 veröffentlichen. Die Informationen über den Index der erneuerbaren Energien der Rechenzentren 18, 20, 22 werden an alle anderen Rechenzentren 18, 20, 22 weitergegeben, sodass diese wissen, welcher Index der erneuerbaren Energien in anderen Regionen verfügbar ist.

Im vorliegenden Ausführungsbeispiel ist die erste elektronische Recheneinrichtung 30 die bevorzugte elektronische Recheneinrichtung des Nutzers 46. Die elektronische Recheneinrichtung 30 muss dabei derart konzipiert sein, dass sie flexibel skalierbar ist, das heißt es können so viele Computerknoten hochgefahren werden, wie erforderlich sind, um die Datenverarbeitungsanforderung 44 des Nutzers 46 bedienen zu können. Die Skalierbarkeit ist dabei für moderne Computersysteme bereits bekannt und wird heute zur Skalierung der Systeme innerhalb eines Rechenzentrums 18, 20, 22 eingesetzt. Beispielhafte Technologien hierfür sind die Kubernetes sowie die Serverless Infrastructure.

Die Datenleitung 42, welche auch als Data Backbone bezeichnet werden kann, ist für solche hochskalierbaren Systeme eingesetzt, damit die einzelnen elektronischen Recheneinrichtungen 30, 32, 34 die durch die Nutzer 46 verursachten Datenänderungen synchronisieren können. Diese Technologie wird heute innerhalb eines jeweiligen Rechenzentrums 18, 20, 22 für solche skalierbaren Systeme eingesetzt. Erfindungsgemäß ist hierbei das Data Backbone zwischen den einzelnen Rechenzentren 18, 20, 22 beziehungsweise zwischen den jeweiligen elektronischen Recheneinrichtungen 30, 32, 34 vorgesehen.

Die Verteilungseinrichtungen 24, 26, 28, welche separat zu den elektronischen Recheneinrichtungen 30, 32, 34 oder auch intern zu den elektronischen Recheneinrichtungen 30, 32, 34 ausgebildet sein können, bilden dabei einen wesentlichen Kern der Erfindung. Diese Verteilungseinrichtung 24 können auch als sogenannter Load Balancer bezeichnet werden. Der Load Balancer übernimmt dabei die Aufgabe, eingehende Anfragen von Nutzern 46 einzuholen und auf die vom Rechnersystem bereitgestellten Knoten innerhalb des Rechenzentrums 18, 20, 22 zu verteilen. Erfindungsgemäß ist nun eine Erweiterung dieses Load Balancers vorgesehen, welche anhand des Indexes für erneuerbare Energien prüft, ob der Index für erneuerbare Energien über einem konfigurierbaren Schwellwert liegt, zum Beispiel 0,9, da beispielsweise mindestens 90 Prozent an erneuerbaren Energien verwendet werden sollen, und ob, sollten die verfügbaren erneuerbaren Energien unterhalb dieses Schwellwerts liegen, ein anderes Rechenzentrum 18, 20, 22 mit einem höheren Index verfügbar ist. Sollte der Schwellenwert im ersten Rechenzentrum 18 oberhalb der beispielsweise 90-Prozent-Marke liegen, wird die Nutzeranfrage in dem Rechenzentrum 18 der lokalen ersten Region 18 bearbeitet, aus der die entsprechende Nutzeranfrage stammt. Sollte der Schwellwert unterschritten sein und beispielsweise im lokalen zweiten Bereich 14 der Schwellwert überschritten sein, mit anderen Worten also ein anderes Rechenzentrum 18, 20, 22 mit einem besseren Index für erneuerbare Energien zur Verfügung stehen, wird die Anfrage zur Bearbeitung an dieses andere Rechenzentrum 18, 20, 22 weitergeleitet. Sollte der Schwellwert in beiden Bereichen unterhalb dieses Schwellwerts liegen, so wird lokal die Datenverarbeitungsanforderung 44 bearbeitet.

Ein praktisches Ausführungsbeispiel wird nachfolgend beschrieben. Beispielsweise möchte ein Nutzer 46 in Europa das Rechenzentrum 18 in der Nacht benutzen. In Europa ist jedoch nachts wenig erneuerbare Energie vorhanden, da beispielsweise kein Solarstrom erzeugt wird. Daher ist die verfügbare erneuerbare Energie im Netz gering. Zur gleichen Zeit scheint beispielsweise in Amerika, insbesondere im lokalen zweiten Bereich 40, die Sonne und es weht entsprechend Wind, sodass mehr erneuerbare Energie zur Verfügung steht, die von den lokalen Verteilern verbraucht werden kann. In diesem Fall werden die entsprechenden Datenverarbeitungsanforderungen 44 in Europa ankommen und an die zweite elektronische Recheneinrichtung 32 im lokalen zweiten Bereich 14, insbesondere vorliegend Amerika, weitergeleitet. Dies ermöglicht die Reduzierung der Nachfrage nach elektrischer Energie in Europa und die verfügbaren erneuerbaren Energien in Amerika zu nutzen, anstatt erneuerbare Anlagen abzuschalten, um das Stromnetz zu schützen.

Ferner gibt es Nutzer 46 in Europa, die die Datenverarbeitungsanforderung 44 bei Tageslicht benutzen wollen, wenn auch viel Wind weht. In diesem Fall ist der Index der erneuerbaren Energien in Europa sehr hoch. Daher werden die Anfragen des Nutzers 46, die im ersten Rechenzentrum 18 in Europa eingehen und im lokalen Rechenzentrum in Europa ausgeführt.

Gemäß der vorgeschlagenen Erfindung sind folgende Erwägungen noch mit hinzuzuziehen. Das Verfahren darf nur auf elektronischen Recheneinrichtungen 30, 32, 34 verwendet werden, die so konzipiert sind, dass sie flexibel skaliert werden können. Ferner müssen die elektronischen Recheneinrichtungen 30, 32, 34 unabhängig von Region und Zeitzonen die Datenverarbeitungsanforderung 44 verarbeiten können. Des Weiteren muss die entsprechende Netzwerklatenz in Kauf genommen werden, die entsteht, wenn Anfragen an andere Rechenzentren 18, 20, 22 weitergeleitet werden, das heißt in der lokalen Region beträgt die typische Latenzzeit etwa sieben Millisekunden, in ausländischen Regionen kann es bis zu 200 Millisekunden betragen, abhängig von der Entfernung zu einem anderen Rechenzentrum 18, 20, 22. Die Erfindung trägt insbesondere dazu bei, die Nachhaltigkeitsziele mehrerer Länder und Nationen in der Welt zu erreichen.

### Bezugszeichenliste

- 10: Datenverarbeitungssystem
- 12: lokaler erster Bereich
- 14: lokaler zweiter Bereich
- 16: lokaler dritter Bereich
- 18: erstes Rechenzentrum
- 20: zweites Rechenzentrum
- 22: drittes Rechenzentrum
- 24: erste Verteilungseinrichtung
- 26: zweite Verteilungseinrichtung
- 28: dritte Verteilungseinrichtung
- 30: erste elektronische Recheneinrichtung
- 32: zweite elektronische Recheneinrichtung
- 34: dritte elektronische Recheneinrichtung
- 36: erste Datenbank
- 38: zweite Datenbank
- 40: dritte Datenbank
- 42: Datenleitung
- 44: Datenverarbeitungsanforderung
- 46: Nutzer
- 48: aktueller erster Energiewert
- 50: aktueller zweiter Energiewert
- 52: aktueller dritter Energiewert
- 54: Empfangseinrichtung

## Patentansprüche

1. Verfahren zum Bearbeiten einer Datenverarbeitungsanforderung (44) von einem Nutzer (46) mittels eines Datenverarbeitungssystems (10), mit den Schritten:
- Empfangen der Datenverarbeitungsanforderung (44) mittels einer ersten elektronischen Recheneinrichtung (30) des Datenverarbeitungssystems (10);
- Bewerten eines Energieaufwands der Datenverarbeitungsanforderung (44) mittels der ersten elektronischen Recheneinrichtung (30);
- Empfangen eines aktuellen ersten Energiewerts (48) für nachhaltig erzeugte Energie in einem lokalen ersten Bereich (12) der ersten elektronischen Recheneinrichtung (30) mittels einer Empfangseinrichtung (54) der ersten elektronischen Recheneinrichtung (30);
- Empfangen eines aktuellen zweiten Energiewerts (50) für nachhaltig erzeugte Energie in einem lokalen zweiten Bereich (14) einer zweiten elektronischen Recheneinrichtung (32) des Datenverarbeitungssystems (10), wobei der zweite Bereich (14) unabhängig und disloziert vom ersten Bereich (12) ist, mittels der Empfangseinrichtung (54); und
- Bearbeiten der Datenverarbeitungsanforderung (44) in Abhängigkeit von dem Energieaufwand, dem aktuellen ersten Energiewert (48) und dem aktuellen zweiten Energiewert (50) mittels der ersten elektronischen Recheneinrichtung (30) oder der zweiten elektronischen Recheneinrichtung (32).

2. Verfahren nach Anspruch 1, **dadurch gekennzeichnet, dass** bei einer Bearbeitung der Datenverarbeitungsanforderung (44) mittels der zweiten elektronischen Recheneinrichtung (32) die Datenverarbeitungsanforderung (44) von der ersten elektronischen Recheneinrichtung (30) an die zweite elektronische Recheneinrichtung (32) über eine Datenleitung (42) übermittelt wird.

3. Verfahren nach Anspruch 2, **dadurch gekennzeichnet, dass** nach der Bearbeitung der Datenverarbeitungsanforderung (44) mittels der zweiten elektronischen Recheneinrichtung (32) die bearbeitete Datenverarbeitungsanforderung (44) über die Datenleitung (42) von der zweiten elektronischen Recheneinrichtung (32) an die erste elektronische Recheneinrichtung (30) übermittelt wird.

4. Verfahren nach einem der vorhergehenden Ansprüche, **dadurch gekennzeichnet, dass**
bei einem Überschreiten eines vorgegebenen aktuellen ersten Energiewerts (48) die Datenverarbeitungsanforderung (44) mittels der ersten elektronischen Recheneinrichtung (30) bearbeitet wird.

5. Verfahren nach einem der vorhergehenden Ansprüche, **dadurch gekennzeichnet, dass**
einem Unterschreiten eines vorgegebenen aktuellen ersten Energiewerts (48) und bei einem Überschreiten eines vorgegebenen aktuellen zweiten Energiewerts (50) die Datenverarbeitungsanforderung (44) mittels der zweiten elektronischen Recheneinrichtung (32) bearbeitet wird.

6. Verfahren nach einem der vorhergehenden Ansprüche, **dadurch gekennzeichnet, dass**
einem Unterschreiten eines vorgegebenen aktuellen ersten Energiewerts (48) und bei einem Unterschreiten eines vorgegebenen aktuellen zweiten Energiewerts (50) die Datenverarbeitungsanforderung (44) mittels der ersten elektronischen Recheneinrichtung (30) bearbeitet wird.

7. Verfahren nach einem der vorhergehenden Ansprüche, **dadurch gekennzeichnet, dass**
der aktuelle erste Energiewert (48) und/oder der zweite aktuelle Energiewert (50) von einem jeweiligen lokalen Energieversorger empfangen werden.

8. Verfahren nach einem der vorhergehenden Ansprüche, **dadurch gekennzeichnet, dass**
die jeweiligen aktuellen Energiewerte (48, 50) zwischen den elektronischen Recheneinrichtungen (30, 32), insbesondere mittels einer Datenleitung (42), ausgetauscht werden.

9. Verfahren nach einem der vorhergehenden Ansprüche, **dadurch gekennzeichnet, dass**
nur zeitunkritische Datenverarbeitungsanforderungen (44) mittels der zweiten elektronischen Recheneinrichtung (32) bearbeitet werden.

10. Verfahren nach einem der vorhergehenden Ansprüche,
**dadurch gekennzeichnet, dass**
die Datenverarbeitungsanforderung (44) mittels der ersten elektronischen Recheneinrichtung (30) in zumindest zwei Teildatenverarbeitungsanforderungen unterteilt wird und in Abhängigkeit von den jeweiligen aktuellen Energiewerten (48, 50) ein erster Teil der Datenverarbeitungsanforderung (44) mittels der ersten elektronischen Recheneinrichtung (30) bearbeitet wird und/oder ein zweiter Teil der Datenverarbeitungsanforderung (44) mittels der zweiten elektronischen Recheneinrichtung (32) bearbeitet wird.

11. Verfahren nach einem der vorhergehenden Ansprüche,
**dadurch gekennzeichnet, dass**
die erste elektronische Recheneinrichtung (30) und/oder die zweite elektronische Recheneinrichtungen (32) zum Durchführen von Container-Anwendungen bereitgestellt werden.

12. Verfahren nach einem der vorhergehenden Ansprüche,
**dadurch gekennzeichnet, dass**
wobei ein potentieller Energieaufwand zum Übertragen der Datenverarbeitungsanforderung (44) zwischen den elektronischen Recheneinrichtungen (30, 32) berücksichtigt wird.

13. Computerprogrammprodukt mit Programmcodemitteln, welche eine elektronische Recheneinrichtung dazu veranlasst, wenn die Programmcodemittel von der elektronischen Recheneinrichtung (30 ,32) abgearbeitet werden ein Verfahren nach einem der Ansprüche 1 bis 12 durchzuführen.

14. Computerlesbares Speichermedium mit zumindest einem Computerprogrammprodukt nach Anspruch 13.

15. Datenverarbeitungssystem (10) zum Bearbeiten einer Datenverarbeitungsanforderung (44) von einem Nutzer (46), mit zumindest einer ersten elektronischen Recheneinrichtung (30) und einer zweiten elektronischen Recheneinrichtung (32), wobei das Datenverarbeitungssystem (10) zum Durchführen eines Verfahrens nach einem der Ansprüche 1 bis 12 ausgebildet ist.
